# EUROPEAN PATENT APPLICATION

(11) **EP 3 903 600 A1**
(43) Date of publication of application: **03.11.2021**
(21) Application number: 19905818.1
(22) Date of filing: 26.12.2019
(51) Int. Cl.: A23L 2/00, A23L 2/54, A23L 2/60

(54) **EFFERVESCENT BEVERAGE HAVING FOAM RETENTION PROPERTIES AND METHOD FOR IMPROVING FOAM RETENTION PROPERTIES OF EFFERVESCENT BEVERAGE**

(30) Priority: 28.12.2018 JP 2018247873
(71) Applicant: Suntory Holdings Limited, Osaka 530-8203 (JP)
(72) Inventor: ITOYAMA Akinori, Kawasaki-shi, Kanagawa 211-0067 (JP); ASAMI Yoji, Kawasaki-shi, Kanagawa 211-0067 (JP); FUJIE Akiko, Kawasaki-shi, Kanagawa 211-0067 (JP); YOKOO Yoshiaki, Kawasaki-shi, Kanagawa 211-0067 (JP)
(74) Representative: Mewburn Ellis LLP
(86) International application number: PCT/JP2019/051168
(87) International publication number: WO 2020/138310

(57) **Abstract**

Provided are a novel effervescent beverage having foam retention properties and a method for improving foam retention properties. The present invention provides an effervescent beverage:
containing Reb.D and Reb.M, the Reb.D content being 60 to 600 ppm, the Reb.M content being 50 to 600 ppm, the total content of Reb.D and Reb.M being 110 to 700 ppm, and (Reb.D content)/(Reb.M content) being 2.50 or less; and
having a pH of 2.5 to 6.0.

## Description

### TECHNICAL FIELD

The present invention relates to sparkling beverages having foam retention, and to a method for improving foam retention of a sparkling beverage. The present invention also relates to use of a combination of Reb. D and Reb. M for improving foam retention of a sparkling beverage, and to a foam retention improving agent.

### BACKGROUND ART

A wide range of consumers drink sparkling beverages by choice. A variety of sparkling beverages are currently commercially available, and these beverages have characteristics such that a user can visually enjoy the foaming caused in opening a beverage container or pouring the beverage into another container such as a glass, and can feel the refreshing feeling of the beverage going down his/her throat.

Sparkling beverages having foam retention have been reported. Patent Literature 1 reports a foaming beverage having improved foam retention containing one, two or more selected from proline, a hesperidin sugar adduct and methyl hesperidin. Patent Literature 2 reports a beverage containing a water-soluble soybean polysaccharide.

### CITATION LIST

### Patent Literature

Patent Literature 1: Japanese Patent Laid-Open No. 2015-181361
Patent Literature 2: Japanese Patent Laid-Open No. 2016-129510

### SUMMARY OF THE INVENTION

### Technical Problem

In consideration of the aforementioned circumstances, there is currently a demand for novel sparkling beverages having foam retention and for a method of improving foam retention.

### Solution to the Problem

The present inventors have found that foam retention of a sparkling beverage can be unexpectedly improved by causing a prescribed amount of a sweet substance selected from the group consisting of Reb. D, Reb. M and a combination of these to be contained in the sparkling beverage and adjusting pH to a prescribed range. The present invention is based on this finding.

The present invention embraces the following invention aspects:
[1] A sparkling beverage comprising Reb. D and Reb. M, wherein
   the content of Reb. D is 60 to 600 ppm,
   the content of Reb. M is 50 to 600 ppm,
   the total content of Reb. D and Reb. M is 110 ppm to 700 ppm,
   (Reb. D content)/(Reb. M content) is 2.50 or less, and
   pH is 2.5 to 6.0.
[2] Sparkling beverage according to [1], wherein the content of Reb. D is 60 to 300 ppm.
[3] Sparkling beverage according to [1] or [2], wherein pH is 2.5 to 4.0.
[4] Sparkling beverage according to any one of [1] to [3], wherein the total content of Reb. D and Reb. M is 120 ppm to 600 ppm.
[5] Sparkling beverage according to any one of [1] to [4], wherein the content of Reb. M is 200 ppm to 600 ppm.
[6] Sparkling beverage according to any one of [1] to [5], further comprising one or more steviol glycosides selected from the group consisting of Reb. A, Reb. B, Reb. C, Reb. E, Reb. F, Reb. G, Reb. I, Reb. J, Reb. K, Reb. N, Reb. O, Reb. Q, Reb. R, dulcoside A, rubusoside, steviolmonoside, steviolbioside and stevioside.
[7] Sparkling beverage according to any one of [1] to [6], further comprising Reb. N, wherein the content of Reb. N is 50 ppm or less.
[8] Sparkling beverage according to any one of [1] to [7], wherein a content of Reb. A is 0 to 100 ppm.
[9] Sparkling beverage according to any one of [1] to [8], further comprising one or more sweeteners selected from the group consisting of sucrose, high fructose corn syrup, erythritol, Mogroside V, corn syrup, aspartame, sucralose, acesulfame potassium, saccharin and xylitol.
[10] Sparkling beverage according to any one of [1] to [9], having Brix in terms of sucrose of 5 to 13.
[11] Sparkling beverage according to any one of [1] to [10], having an alcohol content of less than 0.05 v/v%.
[12] Sparkling beverage according to any one of [1] to [11], wherein the sparkling beverage is an orange-flavored, lemon-flavored, lime-flavored, grape-flavored, ginger ale-flavored, cassis-flavored or cola-flavored beverage.
[13] Sparkling beverage according to any one of [1] to [12], comprising one or more selected from the group consisting of caramel, cinnamic aldehyde, phosphoric acid, vanilla and caffeine.
[14] Sparkling beverage according to any one of [1] to [13], wherein foam retention time is 20 seconds to 80 seconds.
[15] Sparkling beverage according to [1] or [2], wherein pH is 3.5 to 4.5.
[16] A method for improving foam retention of a sparkling beverage, including a step of preparing a sparkling beverage comprising Reb. D and Reb. M, wherein the content of Reb. D is 60 to 600 ppm, the content of Reb. M is 50 to 600 ppm, the total content of Reb. D and Reb. M is 110 ppm to 700 ppm, and (Reb. D content)/(Reb. M content) is 2.50 or less.
[17] Use of a combination of Reb. D and Reb. M for improving foam retention of a sparkling beverage.
[18] Use according to [17], wherein foam is stabilized for 20 seconds or more.
[19] A foam retention improving agent comprising a combination of Reb. D and Reb. M.
[20] A sparkling beverage comprising Reb. D at a content of 100 to 600 ppm and having pH of 2.5 to 6.0.
[21] Sparkling beverage according to [20], wherein a content of Reb. A is 0 to 100 ppm.
[22] Sparkling beverage according to [20] or [21], further comprising Reb. N, wherein a content of Reb. N is 50 ppm or less.
[23] Sparkling beverage according to any one of [20] to [22], wherein the content of Reb. D is 300 to 600 ppm.
[24] A sparkling beverage comprising Reb. D and Reb. M, wherein the content of Reb. M is 100 to 600 ppm, the content of Reb. D is 0.1 to 55 ppm, and pH is 2.5 to 6.0.

### ADVANTAGEOUS EFFECTS OF THE INVENTION

According to the present invention, a sparkling beverage having foam retention and a method for improving foam retention of a sparkling beverage can be provided.

### BRIEF DESCRIPTION OF THE DRAWINGS

Figure 1 shows photographs of instruments used in a foam retention test. Figure 1(a) shows a 500 ml measuring cylinder and Figure 1(b) shows a funnel.
Figure 2 is a schematic diagram illustrating procedures of the foam retention test.
Figure 3 illustrates graphs of results of the foam retention test, obtained at various concentrations of Reb. D and Reb. M and various pHs.
Figure 4 illustrates a graph of results of the foam retention test, obtained at various concentrations of Reb. D and Reb. M and various pHs.

### DESCRIPTION OF EMBODIMENTS

The present invention will now be described in detail. It is noted that embodiments described below are merely illustrative and are not intended to limit the present invention to these embodiments alone. The present invention can be practised in various forms without departing from the scope thereof. It is noted that all literature and patent literature including unexamined patent applications, patent publications and the like cited herein are incorporated herein by reference.

As used herein, the terms "rebaudioside" and "Reb." have the same meaning. Similarly, as used herein, the terms "dulcoside" and "dulcoside" have the same meaning.

As used herein, the term "ppm" means "ppm by mass" unless otherwise stated. Besides, since a sparkling beverage usually has a specific gravity of 1, "ppm by mass" can be regarded as being the same as "mg/L".

### 1. Sparkling Beverage having Foam Retention

As described above, the present inventors have unexpectedly obtained a sparkling beverage having foam retention by causing a prescribed amount of a sweet substance selected from the group consisting of Reb. D, Reb. M and a combination of these to be comprised in the sparkling beverage, and adjusting pH to a prescribed range. Accordingly, a sparkling beverage according to one aspect of the present invention is a sparkling beverage comprising Reb. D and Reb. M, in which a content of Reb. D is 60 to 600 ppm, a content of Reb. M is 50 to 600 ppm, a total content of Reb. D and Reb. M is 110 ppm to 700 ppm, Reb. D/Reb. M is 2.50 or less, and pH is 2.5 to 6.0. Besides, the sparkling beverage of another aspect of the present invention is a sparkling beverage comprising 100 to 600 ppm of Reb. D and having pH of 2.5 to 6.0. The sparkling beverage of still another aspect of the present invention is a sparkling beverage comprising Reb. D and Reb. M, in which a content of Reb. M is 100 to 600 ppm, a content of Reb. D is 0.1 to 55 ppm, and pH is 2.5 to 6.0.

The term "sparkling beverage" herein refers to a beverage in which bubbles/foam is generated, and embraces, for example, a beverage in which a foam layer is formed on a liquid surface of the beverage when poured into a container. As used herein, in some cases, bubbles generated within a beverage may be designated as "bubbles", and foam formed on a liquid surface of a beverage may be designated as "foam". Besides, as used herein, the term "to have foam retention" means that foam is retained, and the term "improvement of foam retention" means an improvement made to retain foam for a longer period of time.

An example of the sparkling beverage of the present invention includes a carbonated beverage. A carbonated beverage is a beverage comprising carbon dioxide gas, and such carbon dioxide gas embraces carbon dioxide gas separately injected into a beverage, and carbon dioxide gas generated by fermentation of a part of a raw material. The carbonated beverage is not especially limited, and can be a refreshing beverage, a non-alcoholic beverage, an alcoholic beverage or the like. Specific examples include, but are not limited to, a sparkling beverage, a cola beverage, a diet cola beverage, ginger ale, a soda pop, a fruit flavored carbonated beverage and a carbonated water having fruit flavor.

In one aspect of the present invention, the sparkling beverage contains Reb. D and Reb. M. As used herein, the term "comprising Reb. D and Reb. M" refers to not only a case where Reb. D and Reb. M are added as a mixture to the beverage but also a case where Reb. D and Reb. M are separately added to the beverage. In other words, examples of the case where Reb. D and Reb. M are comprised in the sparkling beverage include a case where a sweet substance extracted from a stevia plant and containing both Reb. D and Reb. M is added to the beverage, a case where a sweet composition obtained by mixing purified products of Reb. D and Reb. M is added to the beverage, and a case where such purified products are separately added to the beverage.

In one aspect of the present invention, the content of Reb. D in the sparkling beverage is 60 to 600 ppm. In another aspect of the present invention, the content of Reb. D in the sparkling beverage may be 70 to 600 ppm, 80 to 600 ppm, 90 to 600 ppm, 100 to 600 ppm, 110 to 590 ppm, 120 to 580 ppm, 130 to 570 ppm, 140 to 560 ppm, 150 to 550 ppm, 160 to 540 ppm, 170 to 530 ppm, 180 to 520 ppm, 190 to 510 ppm, 200 to 500 ppm, 210 to 490 ppm, 220 to 480 ppm, 230 to 470 ppm, 240 to 460 ppm, 250 to 450 ppm, 260 to 440 ppm, 270 to 430 ppm, 280 to 420 ppm, 290 to 410 ppm, 300 to 400 ppm, 300 to 350 ppm, 300 to 600 ppm, 310 to 590 ppm, 320 to 580 ppm, 330 to 570 ppm, 340 to 560 ppm, 350 to 550 ppm, 360 to 540 ppm, 370 to 530 ppm, 380 to 520 ppm, 390 to 510 ppm, 400 to 500 ppm, 380 to 520 ppm, 115 to 500 ppm, 120 to 470 ppm, 150 to 450 ppm, 180 to 420 ppm, 200 to 400 ppm, 220 to 380 ppm, 250 to 350 ppm, 250 to 500 ppm, 280 to 480 ppm, or 300 to 450 ppm. Reb. D has natural sweetness close to that of sucrose, and can impart, when added in an amount falling in the above-described range, preferable sweetness to the beverage with the foam retention effect provided. The content of Reb. D in the beverage can be calculated based on an amount of a raw material added, or may be measured by a known analysis method such as liquid chromatography.

In one aspect of the present invention, the content of Reb. M in the sparkling beverage is 50 to 600 ppm. In another aspect of the present invention, the content of Reb. M in the sparkling beverage may be 60 to 600 ppm, 70 to 600 ppm, 80 to 600 ppm, 90 to 600 ppm, 100 to 600 ppm, 110 to 590 ppm, 120 to 580 ppm, 130 to 570 ppm, 140 to 560 ppm, 150 to 550 ppm, 160 to 540 ppm, 170 to 530 ppm, 180 to 520 ppm, 190 to 510 ppm, 200 to 500 ppm, 210 to 490 ppm, 220 to 480 ppm, 230 to 470 ppm, 240 to 460 ppm, 250 to 450 ppm, 260 to 440 ppm, 270 to 430 ppm, 280 to 420 ppm, 290 to 410 ppm, 300 to 400 ppm, 300 to 350 ppm, 300 to 600 ppm, 310 to 590 ppm, 320 to 580 ppm, 330 to 570 ppm, 340 to 560 ppm, 350 to 550 ppm, 360 to 540 ppm, 370 to 530 ppm, 380 to 520 ppm, 60 to 300 ppm, 100 to 600 ppm, 120 to 570 ppm, 150 to 550 ppm, 180 to 520 ppm, 200 to 600 ppm, 220 to 480 ppm, 250 to 450 ppm, 250 to 600 ppm, 280 to 580 ppm, or 300 to 550 ppm. Reb. M has natural sweetness close to that of sucrose, and can impart, when added in an amount falling in the above-described range, preferable sweetness to the beverage with the foam retention effect provided. The content of Reb. M in the beverage can be calculated based on an amount of a raw material added, or may be measured by a known analysis method such as liquid chromatography.

In one aspect of the present invention, a total content of Reb. D and Reb. M in the sparkling beverage is 110 to 700 ppm. In another aspect of the present invention, the total content of Reb. D and Reb. M in the sparkling beverage may be 110 to 680 ppm, 110 to 660 ppm, 110 to 640 ppm, 110 to 620 ppm, 110 to 600 ppm, 110 to 590 ppm, 120 to 580 ppm, 120 to 600 ppm, 130 to 570 ppm, 140 to 560 ppm, 150 to 550 ppm, 160 to 540 ppm, 170 to 530 ppm, 180 to 520 ppm, 190 to 510 ppm, 200 to 500 ppm, 210 to 490 ppm, 220 to 480 ppm, 230 to 470 ppm, 240 to 460 ppm, 250 to 450 ppm, 260 to 440 ppm, 270 to 430 ppm, 280 to 420 ppm, 290 to 410 ppm, 300 to 400 ppm, 300 to 400 ppm, 300 to 600 ppm, 310 to 590 ppm, 320 to 580 ppm, 330 to 570 ppm, 340 to 560 ppm, 350 to 550 ppm, 360 to 540 ppm, 370 to 530 ppm, 380 to 520 ppm, 390 to 510 ppm, 400 to 500 ppm, or 380 to 520 ppm.

In one aspect of the present invention, (Reb. D content)/(Reb. M content), namely the ratio between the content of Reb. D and the content of Reb. M in the sparkling beverage, is 2.50 or less. This means that Reb. D is comprised in the sparkling beverage of the present invention in an amount equal to or less than 2.50 times the content of Reb. M. For example, when the content of Reb. M is 100 ppm, this means that the content of Reb. D is 250 ppm or less. In another aspect of the present invention, (Reb. D content)/(Reb. M content) in the sparkling beverage may be 2.40 or less, 2.30 or less, 2.20 or less, 2.10 or less, 2.00 or less, 1.90 or less, 1.80 or less, 1.70 or less, 1.60 or less, 1.50 or less, 1.40 or less, 1.30 or less, 1.20 or less, 1.10 or less, 1.00 or less, 0.90 or less, 0.80 or less, 0.70 or less, 0.60 or less, 0.50 or less, 0.40 or less, 0.30 or less, 0.20 or less, or 0.10 or less, and the lower limit may be 0.01 or more, 0.05 or more, 0.10 or more, 0.20 or more, 0.30 or more, 0.40 or more, 0.50 or more, 0.60 or more, 0.70 or more, 0.80 or more, 0.90 or more, 1.10 or more, 1.20 or more, 1.30 or more, 1.40 or more, 1.50 or more, 1.60 or more, 1.70 or more, 1.80 or more, or 1.90 or more, and the numerical value range may be 0.01 to 2.50, 0.05 to 2.40, 0.10 to 2.20, 0.20 to 2.10, 0.30 to 2.00, 0.40 to 1.90, or 0.50 to 1.80.

In another aspect of the present invention, the sparkling beverage contains Reb. D at a content of 100 to 600 ppm and has pH of 2.5 to 6.0. The content of Reb. D may be 110 to 590 ppm, 120 to 580 ppm, 130 to 570 ppm, 140 to 560 ppm, 150 to 550 ppm, 160 to 540 ppm, 170 to 530 ppm, 180 to 520 ppm, 190 to 510 ppm, 200 to 500 ppm, 210 to 490 ppm, 220 to 480 ppm, 230 to 470 ppm, 240 to 460 ppm, 250 to 450 ppm, 260 to 440 ppm, 270 to 430 ppm, 280 to 420 ppm, 290 to 410 ppm, 300 to 400 ppm, 300 to 350 ppm, 300 to 600 ppm, 310 to 590 ppm, 320 to 580 ppm, 330 to 570 ppm, 340 to 560 ppm, 350 to 550 ppm, 360 to 540 ppm, 370 to 530 ppm, 380 to 520 ppm, 390 to 510 ppm, 400 to 500 ppm, or 380 to 520 ppm, 115 to 500 ppm, 120 to 470 ppm, 150 to 450 ppm, 180 to 420 ppm, 200 to 400 ppm, 220 to 380 ppm, 250 to 350 ppm, 250 to 500 ppm, 280 to 480 ppm, or 300 to 450 ppm. In one aspect of the present invention, the sparkling beverage contains Reb. D at a content of 100 to 600 ppm and has pH of 2.5 to 6.0, and may further contain Reb. M at a content of 0.1 to 100 ppm, 0.2 to 100 ppm, 0.4 to 100 ppm, 0.6 to 100 ppm, 0.8 to 100 ppm, 1.0 to 90 ppm, 2.0 to 80 ppm, 5.0 to 70 ppm, or 10 to 60 ppm.

In a still further aspect of the present invention, the sparkling beverage contains Reb. D and Reb. M, the content of Reb. M is 100 to 600 ppm, the content of Reb. D is 0.1 to 55 ppm, and pH is 2.5 to 6.0. The content of Reb. M may be 110 to 590 ppm, 120 to 580 ppm, 130 to 570 ppm, 140 to 560 ppm, 150 to 550 ppm, 160 to 540 ppm, 170 to 530 ppm, 180 to 520 ppm, 190 to 510 ppm, 200 to 500 ppm, 210 to 490 ppm, 220 to 480 ppm, 230 to 470 ppm, 240 to 460 ppm, 250 to 450 ppm, 260 to 440 ppm, 270 to 430 ppm, 280 to 420 ppm, 290 to 410 ppm, 300 to 400 ppm, 300 to 350 ppm, 300 to 600 ppm, 310 to 590 ppm, 320 to 580 ppm, 330 to 570 ppm, 340 to 560 ppm, 350 to 550 ppm, 360 to 540 ppm, 370 to 530 ppm, 380 to 520 ppm, 390 to 510 ppm, 400 to 500 ppm, or 380 to 520 ppm, 115 to 500 ppm, 120 to 470 ppm, 150 to 450 ppm, 180 to 420 ppm, 200 to 400 ppm, 220 to 380 ppm, 250 to 350 ppm, 250 to 500 ppm, 280 to 480 ppm, or 300 to 450 ppm, and the content of Reb. D may be 0.1 to 50 ppm, 0.2 to 50 ppm, 0.4 to 50 ppm, 0.6 to 50 ppm, 0.8 to 50 ppm, 1.0 to 50 ppm, 2.0 to 45 ppm, 5.0 to 40 ppm, or 10 to 40 ppm.

Reb. D used in the sparkling beverage of the present invention is not especially limited, and may be a plantderived material, a chemical synthetic material or a biosynthetic material. For example, it may be isolated and purified from a plant containing a large amount of Reb. D, or may be obtained through chemical synthesis or biosynthesis. Besides, Reb. D used in the sparkling beverage of the present invention need not have 100% purity, but may be a mixture with another steviol glycoside. In one aspect of the present invention, Reb. D is obtained by purifying a stevia extract, and the thus purified material may comprise another steviol glycoside in addition to Reb. D. Alternatively, Reb. D may be obtained by decomposing Reb. M.

Reb. M used in the sparkling beverage of the present invention is not especially limited, and may be a plantderived material, a chemical synthetic material or a biosynthetic material. For example, it may be isolated and purified from a plant containing a large amount of Reb. M, or may be obtained through chemical synthesis or biosynthesis. Besides, Reb. M used in the sparkling beverage of the present invention need not have 100% purity, but may be a mixture with another steviol glycoside. In one aspect of the present invention, Reb. M is obtained by purifying a stevia extract, and the thus purified material may comprise other steviol glycoside in addition to Reb. M.

In one aspect of the present invention, the sparkling beverage has pH of 2.5 to 6.0. When the pH falls in this range, the foam retention can be satisfactorily retained. When the pH is 2.0 or less, acidity may be too strong as a beverage in some cases, and when the pH exceeds 6.0, refreshing aftertaste may be impaired in some cases. In another aspect of the present invention, the sparkling beverage has pH of 2.5 to 4.0. When the pH falls in this range, generation of microorganisms and the like otherwise caused during storage can be restrained, and in addition, a refreshing taste can be provided. In another aspect of the present invention, the sparkling beverage may have pH of 3.0 to 4.5, 2.6 to 3.9, 2.7 to 3.8, 2.8 to 3.7, 2.9 to 3.6 or 3.0 to 3.5. It is noted that deterioration caused by microorganisms during storage can be restrained in a beverage having pH exceeding 4.0 by performing a filling/sealing step under a sterile environment.

The sparkling beverage of one aspect of the present invention may comprise an additional steviol glycoside in addition to Reb. D and M. The additional steviol glycoside is not especially limited, and in one aspect of the present invention, the sparkling beverage of the present invention further contains one or more steviol glycosides selected from the group consisting of Reb. A, Reb. B, Reb. C, Reb. E, Reb. F, Reb. G, Reb. I, Reb. J, Reb. K, Reb. N, Reb. O, Reb. Q, Reb. R, dulcoside A, rubusoside, steviolmonoside, steviolbioside and stevioside.

In one aspect of the present invention, a content of Reb. A is 0 to 100 ppm, 1 to 100 ppm, 1 to 60 ppm, 1 to 50 ppm, 1 to 40 ppm, 1 to 30 ppm, 1 to 20 ppm, 1 to 10 ppm, or 1 to 5 ppm.

In one aspect of the present invention, a content of Reb. B is 0 to 300 ppm, 1 to 300 ppm, 1 to 200 ppm, 1 to 150 ppm, 1 to 100 ppm, 1 to 80 ppm, 1 to 50 ppm, 1 to 30 ppm or 1 to 10 ppm.

In one aspect of the present invention, a content of Reb. C is 0 to 300 ppm, 1 to 300 ppm, 1 to 200 ppm, 1 to 150 ppm, 1 to 100 ppm, 1 to 80 ppm, 1 to 50 ppm, 1 to 30 ppm, or 1 to 10 ppm.

In one aspect of the present invention, a content of Reb. E is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of Reb. F is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of Reb. G is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of Reb. I is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of Reb. J is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of Reb. K is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of Reb. N is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of Reb. O is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of Reb. Q is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of Reb. R is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of dulcoside A is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of rubusoside is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of steviolmonoside is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of steviolbioside is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of stevioside is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In another aspect of the present invention, the sparkling beverage of the present invention further contains Reb. N, and a content of Reb N is 50 ppm or less. In this aspect, the content of Reb. N is over 0 ppm, and 50 ppm or less. The content of Reb. N may be 0.1 to 50 ppm, 0.5 to 40 ppm, 1.0 to 30 ppm, 1.5 to 25 ppm, 2.0 to 20 ppm, 2.5 to 15 ppm or 3.0 to 10 ppm.

In another aspect of the present invention, the content of Reb. A in the sparkling beverage of the present invention is 0 to 100 ppm. When the content of Reb. A is limited to this range, influence of bitterness of Reb. A can be restrained with the foam retention improved. The content of Reb. A may be 0.01 ppm to 95 ppm, 0.1 ppm to 90 ppm, 1 ppm to 85 ppm, 2 ppm to 80 ppm, 4 ppm to 75 ppm, 6 ppm to 70 ppm, 8 ppm to 65 ppm, 10 ppm to 60 ppm, 12 ppm to 55 ppm or 14 ppm to 50 ppm.

In another aspect of the present invention, the sparkling beverage of the present invention may comprise a sweetener in addition to the steviol glycoside. Such a sweetener is not especially limited, and the beverage may further contain, for example, one or more sweeteners selected from the group consisting of sucrose, high fructose corn syrup, erythritol, Mogroside V, corn syrup, aspartame (also designated as L-phenylalanine compound), sucralose, acesulfame potassium, saccharin and xylitol. In particular, from the viewpoint of imparting a refreshing taste, drinking ease, a natural flavor and adequate body, a natural sweetener is preferably used, and high fructose corn syrup, sucrose or corn syrup is particularly suitably used. One of such sweetener components may be used, or a plurality of these may be used. Such a sweetener may be comprised in the beverage in an amount, in terms of Brix, of 5.0 or less, 4.5 or less, 4.0 or less, 3.5 or less, 3.0 or less, 2.5 or less, 2.0 or less, 1.5 or less, 1.0 or less, or 0.5 or less, and the lower limit may be 0.1 or more.

A gas pressure of the sparkling beverage of the present invention is not especially limited, and may be 2.2 kgf/cm² to 4.0 kgf/cm². In another aspect of the present invention, the gas pressure of the sparkling beverage is 2.2 kgf/cm² to 3.5 kgf/cm², 2.2 kgf/cm² to 3.3 kgf/cm², 2.2 kgf/cm² to 3.2 kgf/cm², 2.3 kgf/cm² to 4.0 kgf/cm², 2.3 kgf/cm² to 3.5 kgf/cm², 2.3 kgf/cm² to 3.2 kgf/cm², 3.0 kgf/cm² to 4.0 kgf/cm², or 3.0 kgf/cm² to 3.5 kgf/cm². A gas content in the sparkling beverage can be regulated by the gas pressure. The term "gas pressure" herein refers, unless otherwise stated, to a gas pressure of carbon dioxide gas in the sparkling beverage obtained after setting a liquid temperature of the beverage held in a container to 20°C, and once releasing air in a head space to be exposed to air pressure (snifting). Accordingly, the sparkling beverage of the present invention can be filled in a container. As the container, a container in any shape and made of any material can be used, and the container can be, for example, a glass bottle, a can, a barrel or a PET bottle. For measuring the gas pressure, the beverage kept at a liquid temperature of 20°C is fixed in a gas internal pressure gauge, carbon dioxide gas present in a head space is released to be exposed to air pressure by once opening a stopcock of the gas internal pressure gauge. Thereafter, the stopcock is closed again, and then the gas internal pressure gauge is shaken to allow a pointer to reach a prescribed position, and a value corresponding to the position is read. As used herein, the gas pressure of the sparkling beverage is measured by this method unless otherwise stated.

In one aspect of the present invention, the sparkling beverage of the present invention has pH of 2.5 to 3.0 and a gas pressure of 2.3 kgf/cm² to 3.2 kgf/cm².

Brix in terms of sucrose of the sparkling beverage of the present invention is not especially limited, and is preferably 3 to 15, more preferably 5 to 13, and further preferably 7 to 11. Here, the Brix can be calculated based on a degree of sweetness, as compared with that of sucrose, of each sweetener such as steviol glycoside and the content of the sweetener. The sweetness of Reb. A is 300 times, of Reb. D is 250 times, of Reb. M is 250 times, and of Reb. N is 230 to 240 times as compared with that of sucrose. Accordingly, an amount of the steviol glycoside corresponding to Brix of 1 can be calculated as 33.3 ppm regarding Reb. A, 40.0 ppm regarding Reb. D (also regarding Reb. M), and 41.7 to 43.5 ppm regarding Reb N. The Brix of another steviol glycoside or a sweetener used in addition to the steviol glycoside can be similarly calculated. For example, the sweetness of acesulfame potassium is about 200 times, of sucralose is about 600 time, and of aspartame is about 180 times as compared with that of sucrose. It is noted that a relative ratio of the sweetness of each sweetener as compared with the sweetness of sucrose assumed as 1 can be obtained from a known sugar sweetness conversion table (such as "Inryo Yogo Jiten ("Dictionary of Beverage Terminology" in Japanese)", appendix p. 11, published by Beverage Japan Inc.) or the like.

The sparkling beverage of the present invention may contain alcohol. An alcoholic beverage refers to a beverage containing alcohol, and the term "alcohol" herein means ethyl alcohol (ethanol) unless otherwise stated. An alcoholic beverage of the present invention can be any type of beverages as long as it contains alcohol. It may be a beverage having an alcohol content of 0.05 to 40 v/v% such as beer, low-malt beer, shochu highball or a cocktail, or a beverage having an alcohol content of less than 0.05 v/v% such as non-alcoholic beer, shochu highball taste beverage or a refreshing beverage. The sparkling beverage of the present invention has an alcohol content of preferably less than 0.05 v/v%, and more preferably 0.00 v/v%. It is noted that alcohol content herein is expressed as a volume/volume percentage (v/v%). Besides, the alcohol content of a beverage can be measured by any one of known methods, and can be measured with, for example, a vibration densitometer.

The flavor of the sparkling beverage of the present invention is not especially limited, and the beverage can be adjusted to have various flavors. The sparkling beverage of the present invention may be, for example, an orange-flavored, lemon-flavored, lime-flavored, grape-flavored, ginger ale-flavored, cassis-flavored, or cola-flavored beverage. The flavor of the sparkling beverage of the present invention can be adjusted by adding a component approved as a food additive or a component that is not approved but generally regarded as safe because it is eaten for a long period of time, such as fruit juice, an acidulant, a spice, a plant extract, a dairy product, or another flavor. In one aspect of the present invention, the sparkling beverage of the present invention is not a beer-taste beverage.

The sparkling beverage of the present invention may further contain one or more selected from the group consisting of caramel, cinnamic aldehyde (cinnamaldehyde), phosphoric acid, vanilla and caffeine. When such a component is contained, the foam retention can be further improved. Here, caffeine may be not only a purified product usable as a food additive (purified product having a caffeine content of 98.5% or more) or a coarsely purified product usable as food (having a caffeine content of 50 to 98.5%) but also an extract of a plant containing caffeine (such as a tea leaf, a cola nut, a coffee bean or guarana) or a concentrate of the extract. In one aspect of the present invention, a caffeine content in the sparkling beverage can be 1 to 200 ppm. Quantitative determination of caffeine may be performed by any method, and can be performed by, for example, filtering the sparkling beverage through a membrane filter (cellulose acetate film 0.45 µm, manufactured by ADVANTEC), and subjecting the resultant sample to high-performance liquid chromatography (HPLC).

In another aspect, the sparkling beverage of the present invention can contain cinnamic aldehyde (cinnamaldehyde). Here, cinnamaldehyde (C₆H₅CH=CH-CHO, molecular weight: 132.16) is a kind of aromatic aldehydes known as a cinnamon odor component, and is available as a fragrance preparation. In one aspect of the present invention, the sparkling beverage can contain cinnamaldehyde in an amount in a specific range. A cinnamaldehyde content in the sparkling beverage of the present invention can be, for example, 0.5 to 50 ppm, and preferably 0.5 to 32 ppm or 1.0 to 20 ppm. Quantitative determination of cinnamaldehyde can be performed by, for example, gas chromatography or a method using a mass spectrometer or the like.

In still another aspect, the sparkling beverage of the present invention can contain caramel (or caramel color). Here, edible known caramel color can be used as the caramel. For example, a product obtained by heat treating an edible carbohydrate typified by sugar or glucose, or a product obtained by heat treating an edible carbohydrate with an acid or alkali added thereto can be used. Alternatively, a sugar content contained in fruit juice or vegetable juice can be caramelized for use, and in this case, the sugar content can be caramelized by a heat treatment or a treatment with an acid or alkali. The sparkling beverage of the present invention can contain caramel color in a content in a specific range.

In another aspect of the present invention, the sparkling beverage of the present invention contains substantially no caramel (or caramel color). When it contains substantially no caramel, the beverage can be inhibited from being colored. As used herein, the term "to contain substantially no caramel" embraces a case where caramel in such a small amount as not to affect the color of the sparkling beverage is contained as an impurity.

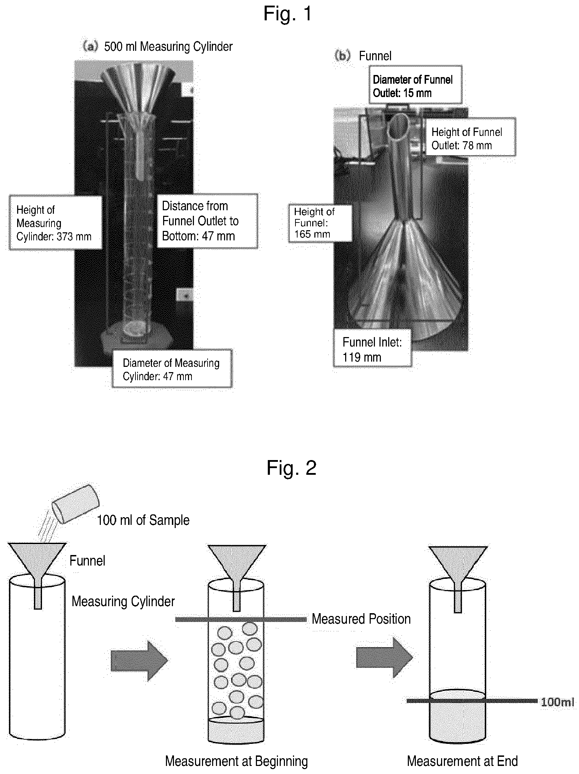

In the sparkling beverage of the present invention, foam is stabilized. For example, foam generated when the sparkling beverage of the present invention is poured into a container is retained for a longer period of time than that of a general sparkling beverage. The foam retention of a sparkling beverage can be evaluated as follows. To a test solution having pH adjusted with phosphoric acid, a sweet substance selected from the group consisting of Reb. D, Reb. M and a combination of these, and an arbitrary additive are added, and a gas pressure in the resultant is adjusted by using a carbon dioxide gas. The thus obtained sample is put in a container (such as a 100 ml glass bottle), the container is sealed and then opened, and the sample contained in the container is poured into a 500 mL measuring cylinder with a funnel placed on the upper end thereof at a rate of 100 ml/2 sec in such a manner as to run down on the funnel wall. A scale mark corresponding to the level of the thus obtained foaming surface is read to be defined as a liquid surface height (ml) at the beginning of the test. Instruments used in the test and the outline of the test are respectively illustrated in Figures 1 and 2. The liquid surface height is checked every predetermined time, and time until the liquid surface height reaches 100 ml (namely, until the whole foam on the liquid surface disappears) is measured and recorded. When foam disappearance time is high, a 200 mL measuring cylinder may be used for the test instead of the 500 mL measuring cylinder.

Foam retention time of the sparkling beverage of the present invention is, when measured by the above-described method, preferably 20 seconds or more. In one aspect of the present invention, the foam retention time of the sparkling beverage is 20 seconds to 80 seconds, preferably 30 to 80 seconds, and more preferably 35 to 80 seconds.

The sparkling beverage of the present invention may be prepared as a packaged beverage obtained by heat sterilizing the beverage and filling the resultant in a container. The container is not especially limited, and examples include a PET bottle, an aluminum can, a steel can, a carton, a chilled cup and a bottle. When heat sterilization is performed, the type is not especially limited, and the sterilization can be performed by employing usual technique such as UHT sterilization or retort sterilization. A temperature employed in the heat sterilization process is not especially limited, and is, for example, 65 to 130°C, and preferably 85 to 120°C, and the process is performed for 10 to 40 minutes. Even when the sterilization is performed at a proper temperature for several seconds, for example, 5 to 30 seconds, however, there arises no problem as long as a sterilization value equivalent to that obtained under the aforementioned conditions can be obtained.

The energy (total energy) of the beverage of the present invention is not especially limited, and can be 0 to 50 Kcal/100 ml, 0 to 45 Kcal/100 ml, 0 to 40 Kcal/100 ml, 0 to 35 Kcal/100 ml, 0 to 30 Kcal/100 ml, 0 to 24 Kcal/100 ml, 0 to 22 Kcal/100 ml, 0 to 20 Kcal/100 ml, 0 to 15 Kcal/100 ml, 0 to 10 Kcal/100 ml, 0 to 5 Kcal/100 ml, 0.1 to 50 Kcal/100 ml, 0.1 to 45 Kcal/100 ml, 0.1 to 40 Kcal/100 ml, 0.1 to 35 Kcal/100 ml, 0.1 to 30 Kcal/100 ml, 0.1 to 24 Kcal/100 ml, 0.1 to 22 Kcal/100 ml, 0.1 to 20 Kcal/100 ml, 0.1 to 15 Kcal/100 ml, 0.1 to 10 Kcal/100 ml, 0.1 to 5 Kcal/100 ml, 1 to 50 Kcal/100 ml, 1 to 45 Kcal/100 ml, 1 to 40 Kcal/100 ml, 1 to 35 Kcal/100 ml, 1 to 30 Kcal/100 ml, 1 to 24 Kcal/100 ml, 1 to 22 Kcal/100 ml, 1 to 20 Kcal/100 ml, 1 to 15 Kcal/100 ml, 1 to 10 Kcal/100 ml, 1 to 5 Kcal/100 ml, 5 to 50 Kcal/100 ml, 5 to 45 Kcal/100 ml, 5 to 40 Kcal/100 ml, 5 to 35 Kcal/100 ml, 5 to 30 Kcal/100 ml, 5 to 24 Kcal/100 ml, 5 to 20 Kcal/100 ml, 5 to 15 Kcal/100 ml, 5 to 10 Kcal/100 ml, 10 to 50 Kcal/100 ml, 10 to 45 Kcal/100 ml, 10 to 40 Kcal/100 ml, 10 to 35 Kcal/100 ml, 10 to 30 Kcal/100 ml, 10 to 24 Kcal/100 ml, 10 to 20 Kcal/100 ml, 10 to 15 Kcal/100 ml, 15 to 50 Kcal/100 ml, 15 to 45 Kcal/100 ml, 15 to 40 Kcal/100 ml, 15 to 35 Kcal/100 ml, 15 to 30 Kcal/100 ml, 15 to 24 Kcal/100 ml, 15 to 20 Kcal/100 ml, 20 to 50 Kcal/100 ml, 20 to 45 Kcal/100 ml, 20 to 40 Kcal/100 ml, 20 to 35 Kcal/100 ml, 20 to 30 Kcal/100 ml, 20 to 24 Kcal/100 ml, 24 to 50 Kcal/100 ml, 24 to 45 Kcal/100 ml, 24 to 40 Kcal/100 ml, 24 to 35 Kcal/100 ml, or 24 to 30 Kcal/100 ml.

A production method for the sparkling beverage of the present invention is not especially limited, and the beverage can be produced by a usual production method for a sparkling beverage. For example, a syrup of a concentrate of components contained in the sparkling beverage of the present invention is prepared, and sparkling drinking water may be added thereto for adjustment to a prescribed concentration, or nonsparkling drinking water may be added thereto and a carbon dioxide gas may be supplied thereafter to prepare the sparkling beverage. Alternatively, without preparing the syrup, the sparkling beverage of the present invention may be prepared by adding a prescribed component directly to a sparkling beverage.

### 2. Method for Improving Foam Retention of a Sparkling Beverage

The present invention provides, as a second aspect, a method for improving foam retention of a sparkling beverage. The method for improving foam retention of a sparkling beverage of the present invention comprises a step of preparing a sparkling beverage comprising Reb. D and Reb. M in which a content of Reb. D is 60 to 600 ppm, a content of Reb. M is 50 to 600 ppm, a total content of Reb. D and Reb. M is 110 ppm to 700 ppm, and (Reb. D content)/(Reb. M content) is 2.50 or less. As used herein, the term "step of preparing a sparkling beverage comprising Reb. D and Reb. M in which a content of Reb. D is 60 to 600 ppm, a content of Reb. M is 50 to 600 ppm, a total content of Reb. D and Reb. M is 110 ppm to 700 ppm, and (Reb. D content)/(Reb. M content) is 2.50 or less" refers to a step of causing Reb. D and Reb. M to be comprised in a sparkling beverage and adjusting a content of Reb. D to 60 to 600 ppm, a content of Reb. M to 50 to 600 ppm, a total content of Reb. D and Reb. M to 110 ppm to 700 ppm, and (Reb. D content)/(Reb. M content) to 2.50 or less, and a method for causing a prescribed amount of a sweet substance to be comprised is not especially limited. Accordingly, Reb. D and Reb. M may be previously mixed as raw materials in production of the sparkling beverage, may be separately added after the production of the sparkling beverage, or may be generated through decomposition or the like from a mixed raw material.

The method for improving foam retention of the present invention may comprise an additional step in addition to the above-described step. In one aspect of the present invention, the method may comprise, before or after the step of preparing a sparkling beverage comprising Reb. D and Reb. M in which a content of Reb. D is 60 to 600 ppm, a content of Reb. M is 50 to 600 ppm, a total content of Reb. D and Reb. M is 110 ppm to 700 ppm, and (Reb. D content)/(Reb. M content) is 2.50 or less, a step of adjusting pH of the sparkling beverage to 2.5 to 6.0 or 2.5 to 4.0, or a step of adjusting a gas pressure.

In another aspect of the present invention, the method for improving foam retention may comprise a step of preparing a sparkling beverage having a content of Reb. D of 60 to 600 ppm, 70 to 600 ppm, 80 to 600 ppm, 90 to 600 ppm, 100 to 600 ppm, 110 to 590 ppm, 120 to 580 ppm, 130 to 570 ppm, 140 to 560 ppm, 150 to 550 ppm, 160 to 540 ppm, 170 to 530 ppm, 180 to 520 ppm, 190 to 510 ppm, 200 to 500 ppm, 210 to 490 ppm, 220 to 480 ppm, 230 to 470 ppm, 240 to 460 ppm, 250 to 450 ppm, 260 to 440 ppm, 270 to 430 ppm, 280 to 420 ppm, 290 to 410 ppm, 300 to 400 ppm, 300 to 350 ppm, 300 to 600 ppm, 310 to 590 ppm, 320 to 580 ppm, 330 to 570 ppm, 340 to 560 ppm, 350 to 550 ppm, 360 to 540 ppm, 370 to 530 ppm, 380 to 520 ppm, 390 to 510 ppm, 400 to 500 ppm, 380 to 520 ppm, 115 to 500 ppm, 120 to 470 ppm, 150 to 450 ppm, 180 to 420 ppm, 200 to 400 ppm, 220 to 380 ppm, 250 to 350 ppm, 250 to 500 ppm, 280 to 480 ppm or 300 to 450 ppm.

Besides, as described above in "1. Sparkling Beverage having Foam Retention", the sparkling beverage used in the method for improving foam retention of the present invention may comprise an additional steviol glycoside in addition to Reb. D and Reb. M or another sweetener in addition to steviol glycosides. The pH and the gas pressure of the sparkling beverage are also similar to those described in "1. Sparkling Beverage having Foam Retention".

### 3. Use of a Combination of Reb. D and Reb. M for Improving Foam Retention of a Sparkling Beverage

The present invention provides, as a third aspect, use of a combination of Reb. D and Reb. M for improving foam retention. The present inventors have unexpectedly found that a combination of Reb. D and Reb. M, kinds of steviol glycosides, has an effect of improving foam retention of a sparkling beverage, resulting in conceiving the present invention.

In the use of a combination of Reb. D and Reb. M for improving foam retention of a sparkling beverage of the present invention, the combination of Reb. D and Reb. M can be used in the sparkling beverage in an amount of Reb. D of 60 to 600 ppm, 70 to 600 ppm, 80 to 600 ppm, 90 to 600 ppm, 100 to 600 ppm, 110 to 590 ppm, 120 to 580 ppm, 130 to 570 ppm, 140 to 560 ppm, 150 to 550 ppm, 160 to 540 ppm, 170 to 530 ppm, 180 to 520 ppm, 190 to 510 ppm, 200 to 500 ppm, 210 to 490 ppm, 220 to 480 ppm, 230 to 470 ppm, 240 to 460 ppm, 250 to 450 ppm, 260 to 440 ppm, 270 to 430 ppm, 280 to 420 ppm, 290 to 410 ppm, 300 to 400 ppm, 300 to 350 ppm, 300 to 600 ppm, 310 to 590 ppm, 320 to 580 ppm, 330 to 570 ppm, 340 to 560 ppm, 350 to 550 ppm, 360 to 540 ppm, 370 to 530 ppm, 380 to 520 ppm, 390 to 510 ppm, 400 to 500 ppm, 380 to 520 ppm, 115 to 500 ppm, 120 to 470 ppm, 150 to 450 ppm, 180 to 420 ppm, 200 to 400 ppm, 220 to 380 ppm, 250 to 350 ppm, 250 to 500 ppm, 280 to 480 ppm or 300 to 450 ppm, and an amount of Reb. M of 70 to 600 ppm, 80 to 600 ppm, 90 to 600 ppm, 100 to 600 ppm, 110 to 590 ppm, 120 to 580 ppm, 130 to 570 ppm, 140 to 560 ppm, 150 to 550 ppm, 160 to 540 ppm, 170 to 530 ppm, 180 to 520 ppm, 190 to 510 ppm, 200 to 500 ppm, 210 to 490 ppm, 220 to 480 ppm, 230 to 470 ppm, 240 to 460 ppm, 250 to 450 ppm, 260 to 440 ppm, 270 to 430 ppm, 280 to 420 ppm, 290 to 410 ppm, 300 to 400 ppm, 300 to 350 ppm, 300 to 600 ppm, 310 to 590 ppm, 320 to 580 ppm, 330 to 570 ppm, 340 to 560 ppm, 350 to 550 ppm, 360 to 540 ppm, 370 to 530 ppm, 380 to 520 ppm, 60 to 300 ppm, 100 to 600 ppm, 120 to 570 ppm, 150 to 550 ppm, 180 to 520 ppm, 200 to 500 ppm, 220 to 480 ppm, 250 to 450 ppm, 250 to 600 ppm, 280 to 580 ppm or 300 to 550 ppm.

In use of a sweet substance selected from the group consisting of Reb. D, Reb. M and a combination of these for improving foam retention of a sparkling beverage of the present invention, the sparkling beverage in which the sweet substance is used is not especially limited, and a general carbonated beverage or the like can be selected. The carbonated beverage is not especially limited and can be a refreshing beverage, a non-alcoholic beverage, an alcoholic beverage or the like. Specific examples include, but are not limited to, a sparkling beverage, a cola beverage, a diet cola beverage, ginger ale, a soda pop, a fruit flavored carbonated beverage and carbonated water having fruit flavor.

The pH and the gas pressure of the sparkling beverage may be similar to those described under "1. Sparkling Beverage having Foam Retention".

Foam retention time to be improved by the use of a sweet substance selected from the group consisting of Reb. D, Reb. M and a combination of these for improving foam retention of a sparkling beverage of the present invention is, when measured by the method described above in "1. Sparkling Beverage having Foam Retention", preferably 20 seconds or more.

### 4. Foam Retention Improving Agent

The present invention provides, as a fourth aspect, a foam retention improving agent. As used herein, the term "foam retention improving agent" refers to a substance that improves foam retention of a sparkling beverage when added to the sparkling beverage. The foam retention improving agent of the present invention can improve foam retention of a sparkling beverage itself when added to the sparkling beverage preferably without causing a user to recognize a taste of the foam retention improving agent itself.

The foam retention improving agent of the present invention contains a combination of Reb. D and Reb. M. Besides, as described above under "1. Sparkling Beverage having Foam Retention"; the foam retention improving agent of the present invention may comprise additional steviol glycoside in addition to Reb. D and Reb. M or another sweetener in addition to steviol glycosides as long as the effects of the present invention are not impaired.

Amounts of Reb. D and Reb. M comprised in the foam retention improving agent of the present invention are not especially limited, and may be, with respect to a total weight of the foam retention improving agent, 30 to 100% by weight, 40 to 99% by weight, 50 to 98% by weight, 60 to 97% by weight, 70 to 96% by weight or 80 to 95% by weight. The foam retention improving agent of the present invention may consist essentially of Reb. D and Reb. M. As used herein, the term "to consist essentially of Reb. D and Reb. M" means that an impurity such as another steviol glycoside unavoidably contained in process of preparation of Reb. D or Reb. M (purification of a stevia extract, biosynthesis or the like) may be contained. For example, with respect to the total weight of the foam retention improving agent, 5% by weight or less, 4% by weight or less, 3% by weight or less, 2% by weight or less, 1.5% by weight or less, 1.0% by weight or less, or 0.5% by weight or less of other second steviol glycoside(s) in addition to Reb. D and Reb. M or another impurity may be contained.

In one aspect of the present invention, (Reb. D content)/(Reb. M content), namely, a ratio between the content of Reb. D and the content of Reb. M, in the foam retention improving agent may be 2.50 or less. This means that Reb. D is comprised in the foam retention improving agent of the present invention in an amount equal to or less than 2.50 times the content of Reb. M. For example, when the content of Reb. M is 10% by weight, this means that the content of Reb. D is 25% by weight or less. In another aspect of the present invention, (Reb. D content)/(Reb. M content) in the sparkling beverage may be 2.40 or less, 2.30 or less, 2.20 or less, 2.10 or less, 2.00 or less, 1.90 or less, 1.80 or less, 1.70 or less, 1.60 or less, 1.50 or less, 1.40 or less, 1.30 or less, 1.20 or less, 1.10 or less, 1.00 or less, 0.90 or less, 0.80 or less, 0.70 or less, 0.60 or less, 0.50 or less, 0.40 or less, 0.30 or less, 0.20 or less, or 0.10 or less, and the lower limit may be 0.01 or more, 0.05 or more, 0.10 or more, 0.20 or more, 0.30 or more, 0.40 or more, 0.50 or more, 0.60 or more, 0.70 or more, 0.80 or more, 0.90 or more, 1.10 or more, 1.20 or more, 1.30 or more, 1.40 or more, 1.50 or more, 1.60 or more, 1.70 or more, 1.80 or more, or 1.90 or more, and the numerical value range may be 0.01 to 2.50, 0.05 to 2.40, 0.10 to 2.20, 0.20 to 2.10, 0.30 to 2.00, 0.40 to 1.90, or 0.50 to 1.80.

Now, the present invention will be more specifically described with reference to examples, and it is noted that the present invention is not limited to these examples.

### EXAMPLES

### Example A Examination of Reb. D and Reb. M Contents and pH

### Preparation of Sparkling Beverage

Phosphoric acid (manufactured by Nippon Chemical Industrial Co., Ltd.) was added to drinking water to adjust pH. After the adjustment of pH, a Reb. D preparation (purity: 95% or more) and a Reb. M preparation (purity: 95% or more) were added to the drinking water in each content shown in Tables 1 to 3 and a gas pressure was adjusted to 3.2 kgf/cm², and thus, samples of Examples 1 to 65 were obtained. The gas pressure was adjusted at 20°C.

### Evaluation of Foam Retention (Foam Retention Test)

The instruments used in the test and the outline of the test are respectively illustrated in Figures 1 and 2. As illustrated in Figure 1, a 500 ml measuring cylinder and a funnel (Figure 1 (b)) were used in the test. These instruments will be described in detail below.

500 ml Measuring Cylinder
- Height of Measuring Cylinder: 373 mm
- Diameter of Measuring Cylinder: 47 mm
- Distance from Funnel Outlet to Bottom: 260 mm Funnel
- Funnel Inlet: 119 mm
- Height of Funnel: 165 mm
- Diameter of Funnel Outlet: 15 mm
- Height of Funnel Outlet: 78 mm

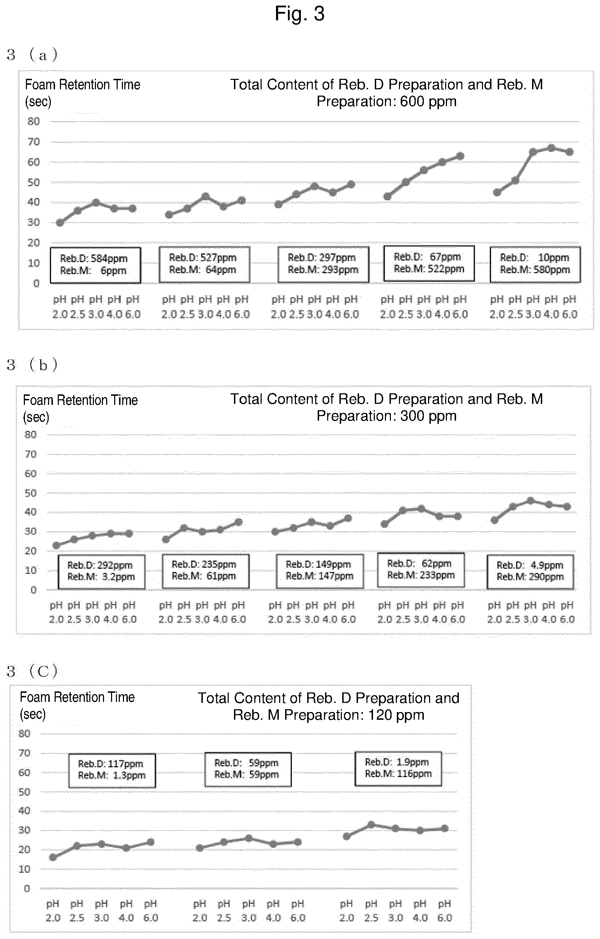

A container (100 ml glass bottle) holding each sample obtained in "Preparation of Sparkling Beverage" was sealed. Thereafter, the container was opened, the sample held in the container was poured into the 500 mL measuring cylinder (NALGENE CAT. No. 3663-0500) with the funnel placed on the upper end thereof at a rate of 100 ml/2 sec in such a manner as to run down on the funnel wall. A scale mark corresponding to the level of the thus obtained foaming surface was read to be defined as a liquid surface height (ml) at the beginning of the test. The liquid surface height was checked every predetermined time, and time until the liquid surface height reached 100 ml (namely, until the whole foam on the liquid surface disappeared) was measured and recorded. This evaluation was performed on each of the samples of Examples 1 to 65. The used Reb. M preparation had a purity of 95% or more. A total content of the Reb. D preparation and the Reb. M preparation was adjusted to about 600 ppm, 300 ppm or 120 ppm. Results thus obtained are shown in Table 1 and Figures 3(a) to 3(c). It is noted that each content of the steviol glycosides shown in the table is a value calculated on the basis of the purity and the mixing amount of the raw material.

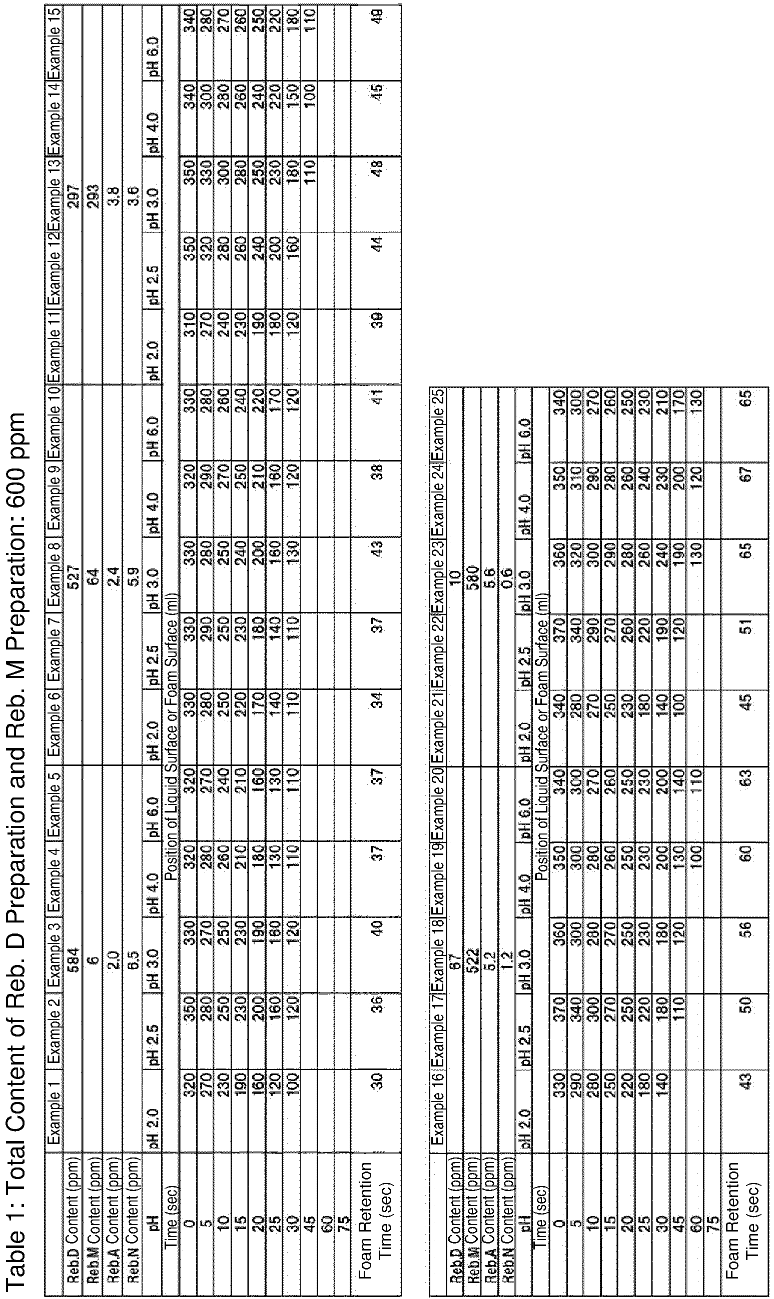

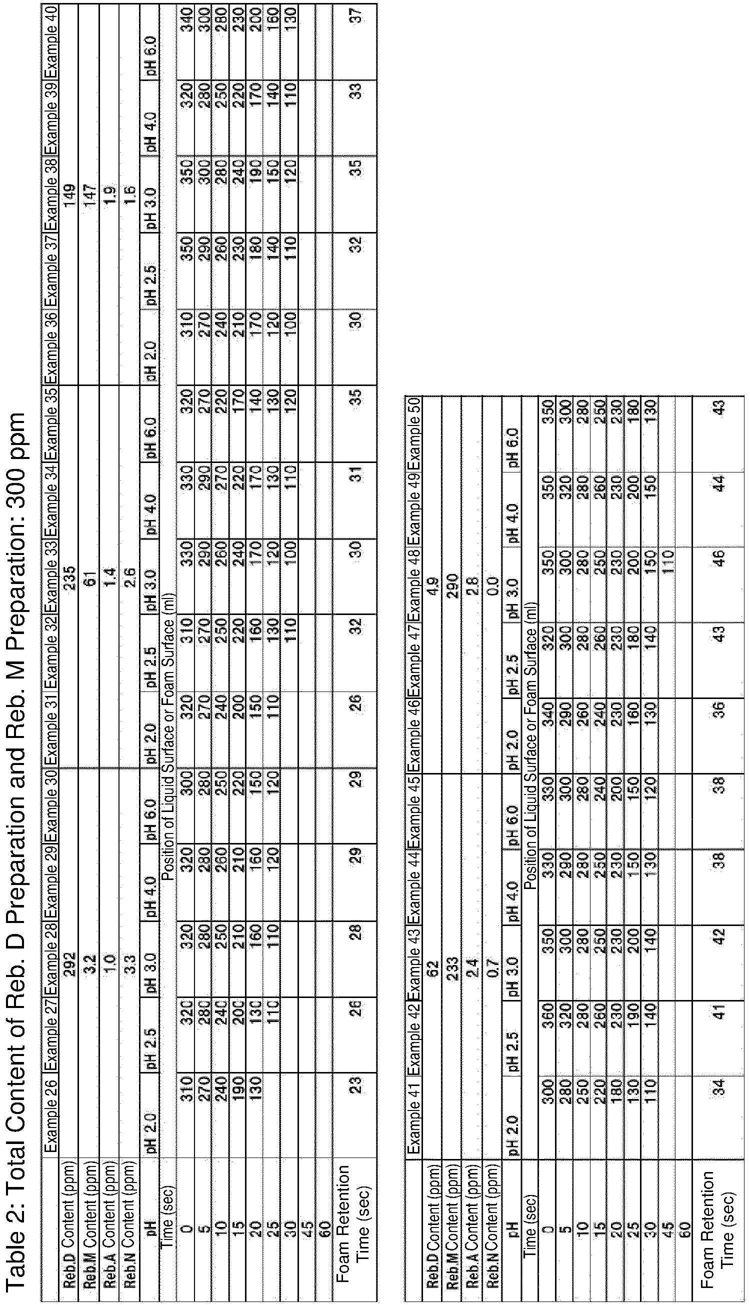

**Table 3: Total Content of Reb. D Preparation and Reb. M Preparation: 120 ppm**

| | Example 51 | Example 52 | Example 53 | Example 54 | Example 55 | Example 56 | Example 57 | Example 58 | Example 59 | Example 60 | Example 61 | Example 62 | Example 63 | Example 64 | Example 65 |
|---|---|---|---|---|---|---|---|---|---|---|---|---|---|---|---|
| Reb.D Content (ppm) | 117 | | | | | 59 | | | | | 1.9 | | | | |
| Reb.M Content (ppm) | 1.3 | | | | | 59 | | | | | 116 | | | | |
| Reb.A Content (ppm) | 0.4 | | | | | 0.8 | | | | | 1.1 | | | | |
| Reb.N Content (ppm) | 1.3 | | | | | 0.7 | | | | | 0.0 | | | | |
| pH | pH 2.0 | pH 2.5 | pH 3.0 | pH4.0 | pH 6.0 | pH 2.0 | pH 2.5 | pH 3.0 | pH 4.0 | pH 6.0 | pH 2.0 | pH 2.5 | pH 3.0 | pH 4.0 | pH 6.0 |

| Time (sec) | Position of Liquid Surface or Foam Surface (ml) | | | | | | | | | | | | | | |
|---|---|---|---|---|---|---|---|---|---|---|---|---|---|---|---|
| 0 | 280 | 330 | 320 | 320 | 320 | 340 | 280 | 320 | 270 | 300 | 340 | 350 | 350 | 310 | 310 |
| 5 | 240 | 290 | 270 | 280 | 270 | 280 | 270 | 290 | 260 | 270 | 300 | 310 | 330 | 280 | 270 |
| 10 | 180 | 250 | 240 | 230 | 230 | 240 | 230 | 250 | 220 | 240 | 260 | 280 | 280 | 250 | 240 |
| 15 | 110 | 170 | 170 | 150 | 160 | 180 | 160 | 200 | 150 | 180 | 220 | 250 | 240 | 220 | 210 |
| 20 | | 110 | 120 | 110 | 120 | 110 | 110 | 150 | 110 | 120 | 150 | 200 | 180 | 160 | 150 |
| 25 | | | | | | | | 110 | | | 110 | 130 | 120 | 120 | 120 |
| 30 | | | | | | | | | | | | 110 | 110 | 100 | 110 |
| 45 | | | | | | | | | | | | | | | |
| Foam Retention Time (sec) | 16 | 22 | 23 | 21 | 24 | 21 | 24 | 26 | 23 | 24 | 27 | 33 | 31 | 30 | 31 |

Based on the results shown in Tables 1 to 3 and Figures 3(a) to 3(c), it was confirmed that foam retention is improved at various contents of the sweet substances and various pHs. In particular, when the total content of Reb. D and Reb. M was about 600 ppm, the improvement effect on the foam retention was remarkable. Besides, it was confirmed that the improvement effect on the foam retention tends to be high particularly at pH of about 2.5 to 4.0.

### Example B Examination of Influence of Sweet Substance Content and pH on Foam Retention

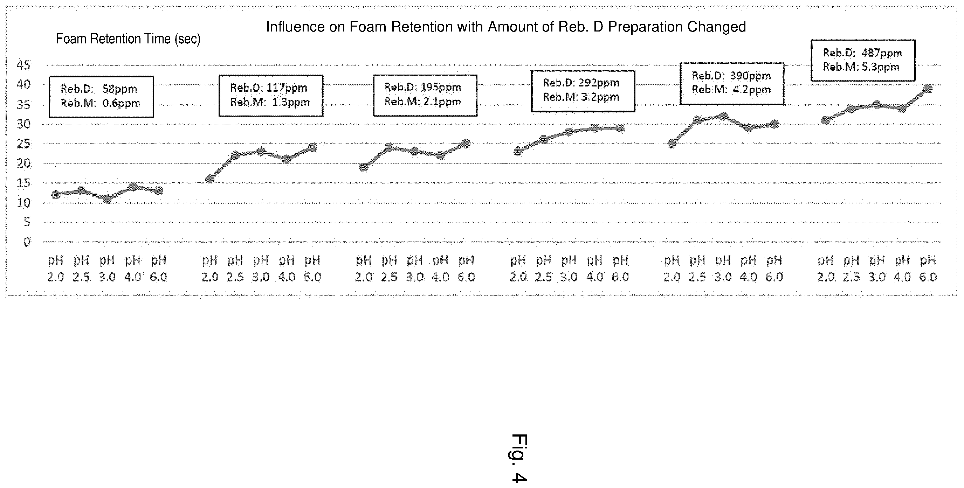

In order to examine the influence of a sweet substance content and pH on foam retention, samples (of Examples 66 to 95) adjusted to have various sweet substance contents and pHs as shown in Table 4 were prepared in the same manner as in Example A. The foam retention of the thus obtained samples was evaluated using the 500 ml measuring cylinder in the same manner as in Example A. Results thus obtained are shown in Table 4 and Figure 4. It is noted that each content of steviol glycosides shown in the table is a value calculated on the basis of the purity and the mixing amount of the raw material.

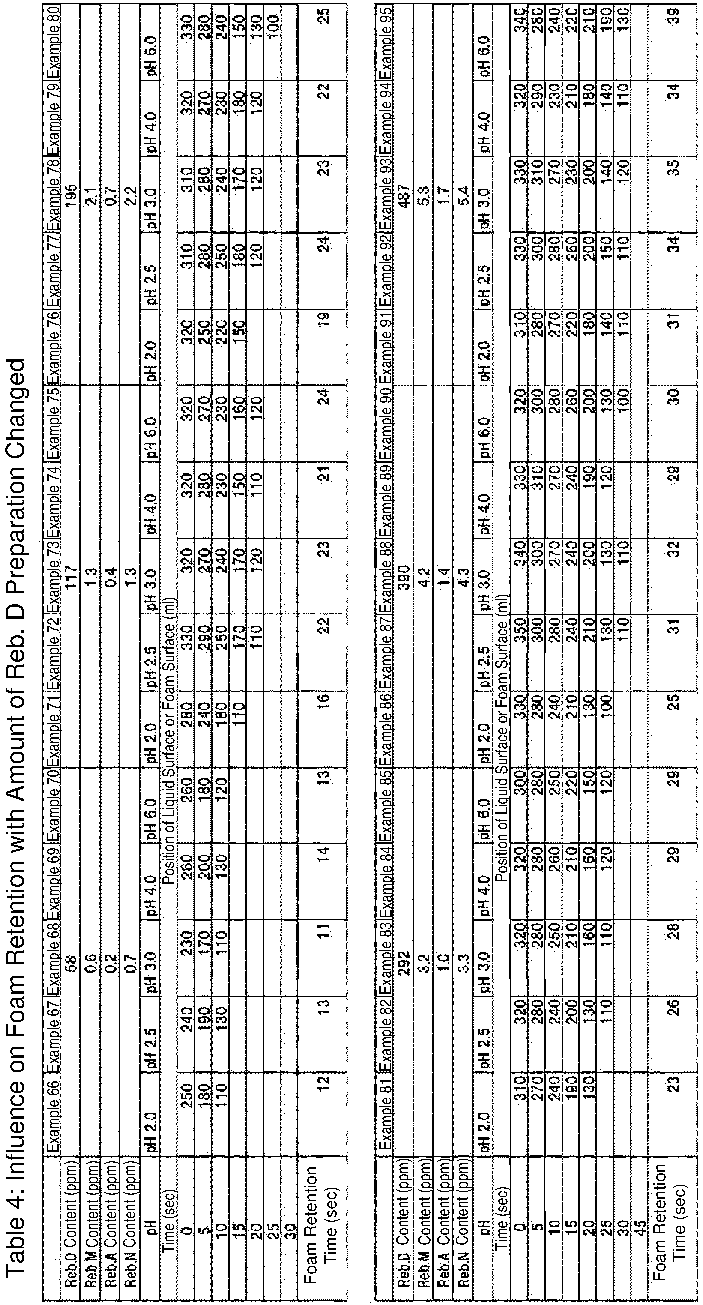

Based on the above-described results, an improvement of foam retention was observed in those samples having a content of Reb. D exceeding 100 ppm. Besides, high foam retention was confirmed at pH of 2.5 or more. Accordingly, it is understood that the foam retention is improved in a sparkling beverage containing Reb. D at a content of 100 to 600 ppm and having pH of 2.5 to 6.0.

As for the foam retention time in this experimental system, an effect of foam retention for 21 to 39 seconds was obtained. In consideration of drinking with the beverage poured into a container such as a glass, the retention time is preferably 10 seconds or more.

### Example C Examination of Influence of Additional Steviol Glycoside on Taste Quality

In order to examine the influence of additional steviol glycoside on taste quality, samples (of Examples 96 to 98) each containing Reb. A (purity: 95% or more) or Reb. A and Reb. D (purity of both: 95% or more) as shown in Table 5 were prepared in the same manner as in Example A. The pH was adjusted to 2.5, and the gas pressure was adjusted to 3.2 kgf/cm². It is noted that each content of Reb. A and Reb. D shown in the table is a value calculated on the basis of the purity and the mixing amount of each raw material.

The samples of Examples 96 to 98 were subjected to a sensory test to evaluate bitterness. Persons trained for sensory evaluation of sweeteners (5 members) were panelists to perform the evaluation as follows.
1) Each sample stored at 5°C was poured into a plastic cup.
2) The panelists held 20 ml of each the following two samples in their mouths to reconcile one another in evaluation criteria.
   Criterion "1. no bitterness felt": carbonated water containing no sweetener (pH 2.5, gas pressure: 3.2 kgf/cm²)
   Criterion "5. very strong bitterness felt": carbonated water containing 300 ppm of Reb. A (pH 2.5, gas pressure: 3.2 kgf/cm²)
3) The panelists held 20 ml each of each sample in their mouths to perform the evaluation.

The evaluation criteria of the sensory test were as follows: No bitterness felt (1); slight bitterness felt (2); bitterness felt (3); strong bitterness felt (4); and very strong bitterness felt (5). Results thus obtained are shown in Table 5.

**Table 5: Examination of Influence of Additional Steviol Glycoside on Taste Quality**

| | Example 96 | Example 97 | Example 98 |
|---|---|---|---|
| Reb. A Content (ppm) | 60 | 120 | 1 |
| Reb. D Content (ppm) | 234 | 166 | 292 |
| Sweetness (derived from Reb. A) | 1.8 | 3.6 | 0 |
| Sweetness (derived from Reb. D) | 6 | 4. 25 | 7. 5 |
| Sweetness (Total) | 7. 8 | 7. 85 | 7. 5 |
| Sensory Evaluation Result (Average of Scores of Five Panelists) | 2. 4 | 3.0 | 2. 2 |

Based on the above-described results, bitterness derived from Reb. A was significantly felt in a sparkling beverage containing 120 ppm of Reb. A. It is understood that the bitterness is felt more strongly when the amount of Reb. A is further increased. On the other hand, the bitterness was only slightly felt in a sparkling beverage containing 100 ppm or less of Reb. A.

## Claims

1. A sparkling beverage comprising Reb. D and Reb. M, wherein
the content of Reb. D is 60 to 600 ppm,
the content of Reb. M is 50 to 600 ppm,
the total content of Reb. D and Reb. M is 110 ppm to 700 ppm,
(Reb. D content)/(Reb. M content) is 2.50 or less, and
pH is 2.5 to 6.0.

2. Sparkling beverage according to claim 1, wherein the content of Reb. D is 60 to 300 ppm.

3. Sparkling beverage according to claim 1 or 2, wherein pH is 2.5 to 4.0.

4. Sparkling beverage according to any one of claims 1 to 3, wherein the total content of Reb. D and Reb. M is 120 ppm to 600 ppm.

5. Sparkling beverage according to any one of claims 1 to 4 wherein the content of Reb. M is 200 ppm to 600 ppm.

6. Sparkling beverage according to any one of claims 1 to 5, further comprising one or more steviol glycosides selected from the group consisting of Reb. A, Reb. B, Reb. C, Reb. E, Reb. F, Reb. G, Reb. I, Reb. J, Reb. K, Reb. N, Reb. O, Reb. Q, Reb. R, dulcoside A, rubusoside, steviolmonoside, steviolbioside and stevioside.

7. Sparkling beverage according to any one of claims 1 to 6 further comprising Reb. N, wherein the content of Reb. N is 50 ppm or less.

8. Sparkling beverage according to any one of claims 1 to 7, wherein a content of Reb. A is 0 to 100 ppm.

9. Sparkling beverage according to any one of claims 1 to 8, further comprising one or more sweeteners selected from the group consisting of sucrose, high fructose corn syrup, erythritol, Mogroside V, corn syrup, aspartame, sucralose, acesulfame potassium, saccharin and xylitol.

10. Sparkling beverage according to any one of claims 1 to 9, having Brix in terms of sucrose of 5 to 13.

11. Sparkling beverage according to any one of claims 1 to 10, having an alcohol content of less than 0.05 v/v%.

12. Sparkling beverage according to any one of claims 1 to 11, wherein the sparkling beverage is an orange-flavored, lemon-flavored, lime-flavored, grape-flavored, ginger ale-flavored, cassis-flavored or cola-flavored beverage.

13. Sparkling beverage according to any one of claims 1 to 12, comprising one or more selected from the group consisting of caramel, cinnamic aldehyde, phosphoric acid, vanilla and caffeine.

14. Sparkling beverage according to any one of claims 1 to 13, wherein foam retention time is 20 seconds to 80 seconds.

15. Sparkling beverage according to claim 1 or 2 wherein pH is 3.0 to 4.5.

16. A method for improving foam retention of a sparkling beverage, comprising a step of preparing a sparkling beverage comprising Reb. D and Reb. M, wherein a content of Reb. D is 60 to 600 ppm, a content of Reb. M is 50 to 600 ppm, a total content of Reb. D and Reb. M is 110 ppm to 700 ppm, and (Reb. D content)/(Reb. M content) is 2.50 or less.

17. Use of a combination of Reb. D and Reb. M for improving foam retention of a sparkling beverage.

18. Use according to claim 17 wherein foam is stabilized for 20 seconds or more.

19. A foam retention improving agent comprising a combination of Reb. D and Reb. M.
